# EUROPEAN PATENT APPLICATION

(11) **EP 2 077 643 A1**
(43) Date of publication of application: **08.07.2009**
(21) Application number: 08251642.8
(22) Date of filing: 08.05.2008
(51) Int. Cl.: H04L 12/26, G06F 17/30

(54) **Method and system for context-aware data prioritization.**

(30) Priority: 02.01.2008 US 968428
(71) Applicant: Verint Systems Ltd., 46733 Herzilya Pituach (IL)
(72) Inventor: Ziv, Katzir, Netanya 42343 (IL)
(74) Representative: Bibby, William Mark

(57) **Abstract**

A computer-implemented method for carrying out a data analysis task having an associated analysis context includes accepting a plurality of data items exchanged over a communication network. One or more rules are determined responsively to the analysis context for prioritizing the data items. The rules are applied to the data items to produce a first prioritization of the data items, and the data items are presented to a human user in accordance with the first prioritization. Feedback is obtained from the human user regarding the first prioritization, and the set of rules is adapted responsively to the feedback. A second prioritization of the data items is generated by applying the adapted set of rules to the data items.

## Description

### FIELD OF THE DISCLOSURE

The present disclosure relates generally to data analytics, and particularly to methods and systems for prioritizing data items obtained from communication networks.

### BACKGROUND OF THE DISCLOSURE

Various systems and applications monitor and analyze traffic that is exchanged over communication networks. For example, communication interception and analysis systems used by intelligence, law enforcement and government agencies sometimes track target users by analyzing the network traffic they generate. In some cases, analyzing the network traffic involves assigning priorities, or relevance scores, to the intercepted data items.

### SUMMARY OF THE DISCLOSURE

Embodiments of the present invention provide a computer-implemented method for carrying out a data analysis task having an associated analysis context, the method including:
accepting a plurality of data items exchanged over a communication network;
determining one or more rules responsively to the analysis context for prioritizing the data items; applying the rules to the data items to produce a first prioritization of the data items;
presenting the data items to a human user in accordance with the first prioritization;
obtaining feedback from the human user regarding the first prioritization;
adapting the set of rules responsively to the feedback; and
generating a second prioritization of the data items by applying the adapted set of rules to the data items.

In some embodiments, applying the adapted set of rules to the data items includes assigning the data items respective relevance scores, which represent the second prioritization. In an embodiment, the data items include a first data item produced by a first application and a second data item produced by a second application different from the first application, and generating the second prioritization includes prioritizing the first data item relative to the second data item using the relevance scores.

In a disclosed embodiment, the adapted set of rules operates on data content conveyed by the data items. Additionally or alternatively, the adapted set of rules operates on metadata information conveyed by the data items. In an embodiment, the method includes iteratively obtaining the feedback from the human user, adapting the set of rules based on the feedback and re-prioritizing the data items using the adapted set of rules.

In another embodiment, the method includes performing an action with respect to the data items based on the second prioritization. Performing the action may include performing at least one action type selected from a group of types consisting of:
presenting at least some of the data items, ordered in accordance with the second prioritization, to the human user;
filtering out some of the data items responsively to the second prioritization;
triggering an alert; and
determining a first subset of the data items to be stored and a second subset of the data items to be discarded responsively to the second prioritization.

In yet another embodiment, the method includes determining an extent to which another plurality of data items matches the analysis context by applying the adapted set of rules to the other plurality of data items.

There is additionally provided, in accordance with an embodiment of the present invention, a system for carrying out a data analysis task having an associated analysis context, the system including:
a network interface, which is arranged to accept a plurality of data items exchanged over a communication network; and
a processor, which is coupled to determine one or more rules responsively to the analysis context for prioritizing the data items, to apply the rules to the data items to produce a first prioritization of the data items, to present the data items to a human user in accordance with the first prioritization, to obtain feedback from the human user regarding the first prioritization, to adapt the set of rules responsively to the feedback, and to generate a second prioritization of the data items by applying the adapted set of rules to the data items.

There is also provided, in accordance with an embodiment of the present invention, a computer software product for carrying out a data analysis task having an associated analysis context, the product including a computer-readable medium, in which program instructions are stored, which instructions, when read by a computer, cause the computer to accept a plurality of data items exchanged over a communication network, to determine one or more rules responsively to the analysis context for prioritizing the data items, to apply the rules to the data items to produce a first prioritization of the data items, to present the data items to a human user in accordance with the first prioritization, to obtain feedback from the human user regarding the first prioritization, to adapt the set of rules responsively to the feedback, and to generate a second prioritization of the data items by applying the adapted set of rules to the data items.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a system for context-aware prioritization of data items, in accordance with an embodiment of the present disclosure; and
Fig. 2 is a flow chart that schematically illustrates a method for context-aware prioritization of data items, in accordance with an embodiment of the present disclosure.

### DETAILED DESCRIPTION OF EMBODIMENTS

### OVERVIEW

The volume of traffic exchanged over communication networks, and the variety of communication applications and services used by network subscribers, are growing at an explosive rate. As a result, systems and applications that analyze network traffic are faced with extremely large, often unmanageable amounts of data. In most practical cases, only a small fraction of the intercepted data items have real value or relevance to a particular analysis task. However, these valuable data items are often obscured by a vast number of other data items that are of little value, and often useless. It is all but impossible for a human analyst to "find the needle in the hay stack," i.e., to differentiate between valuable and low-value data items.

In view of the difficulties associated with manual sorting of large numbers of data items, embodiments of the present disclosure provide methods and systems for automated data item prioritization. Unlike some known prioritization methods, the methods described herein make use of the fact that the relevance of a certain data item usually differs from one analysis context to another. In the present patent application and in the claims, the term "context" refers to the specific objectives and/or preferences that are associated with a particular analysis task.

The context defines the interests and/or preferences of the analyst that should come into effect when prioritizing the data items. A context may comprise, for example, tracking a particular user or group of users, tracking traffic that is relevant to a certain event (e.g., terrorist attack), tracking traffic that is relevant to a certain investigation case or evaluating a certain intelligence assumption. In some cases, the context may also consider the working habits or references of the analyst. In many cases, a certain data item may be invaluable in one context, and totally useless in another.

In the embodiments that are described hereinbelow, a data analysis system, accepts data items, such as items intercepted from a communication network, for prioritization. The data items prioritized by the system typically comprise self-contained communication products, which may contain multiple components and may be constructed using multiple lower-level transactions. Exemplary data items comprise web pages, electronic mail messages, chat conversations and/or file transfer sessions. The notion of self-contained data items is described and demonstrated in greater detail further below.

The system prioritizes the data items using a set of prioritization rules, which act on the data items and produce relevance scores that quantify the relevance of the data items in the applicable analysis context. The rules may consider the content and/or metadata of the data items. The relevance scores enable comparison of data items of different types.

The set of rules that define a particular context is adapted and refined in an iterative process, based on feedback obtained from the analyst. In each iteration, the system prioritizes the data items using the current set of rules. The prioritization results are presented to the analyst, who has the option to provide positive and/or negative feedback as to the prioritization quality. The system then adapts the rules based on the analyst's feedback. The existing data items and/or newly-arriving data items are then prioritized using the updated set of rules. The iterative process continues, and the rules are repeatedly refined based on the analyst's feedback.

In general, the analyst does not define the analysis context explicitly, and does not explicitly formulate the rules. The analyst's role is to provide feedback on the results of the automatic prioritization process, and the rules are adapted automatically based on this feedback. As the analyst-guided iterative process continues, the rules gradually converge to a set of rules that accurately define the desired context.

The system may carry out or invoke various types of actions based on the prioritization of the data items. For example, the system may present some or all of the data items to the analyst in decreasing order of relevance. The system may filter out some of the data items based on their relevance. The system may trigger an alert, or decide whether to store or discard data items, based on the prioritization results. In some embodiments, the set of rules can be used for profiling of other collections of data items, which may originate from the communication network or from any other source. Additionally or alternatively, the prioritization results can be used as input to any other suitable analysis task, system or application.

The context-aware prioritization methods described herein can be used in a real-time manner to process data items as they are accepted from the communication network, or in an off-line manner to process previously recorded collections of data items.

### SYSTEM DESCRIPTION

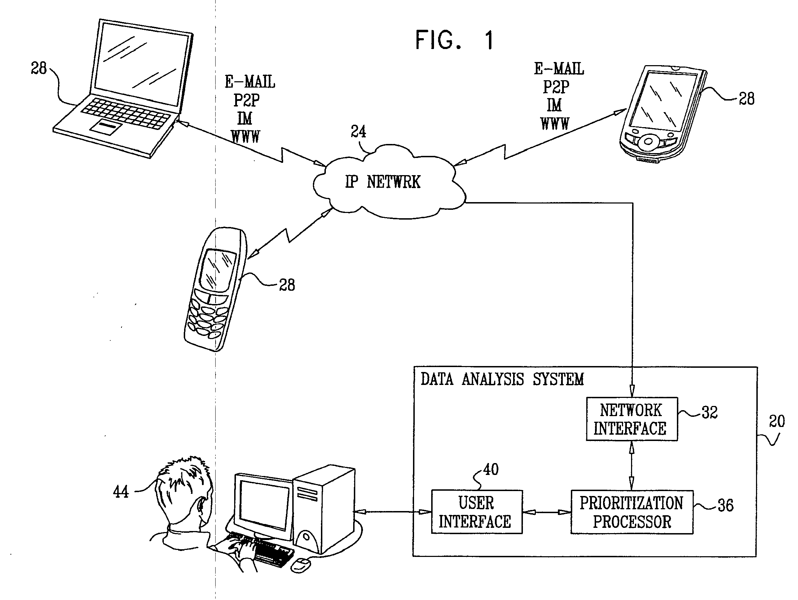

Fig. 1 is a block diagram that schematically illustrates a system 20 for context-aware prioritization of data items that are exchanged over an Internet Protocol (IP) network 24, in accordance with an embodiment of the present disclosure. System 20 may be operated, for example, by an intelligence, government or law-enforcement agency. In alternative embodiments, system 20 can be used for various network analytics, network optimization and data mining applications.

Network 24 may comprise a Wide Area Network (WAN) such as the Internet, a Metropolitan Area Network (MAN), a Local Area Network (LAN), a wireless terrestrial or satellite IP-based network, and/or any other suitable network type. Network 24 provides connectivity and communication services to user terminals 28. Terminals 28 may comprise, for example, desktop or mobile computers, Personal Digital Assistants (PDAs), mobile communication terminals such as cellular phones, and/or any other suitable type of communication or computing terminal capable of IP data communication.

User terminals 28 may communicate over network 24 using different communication applications, such as Internet browsing, electronic mail (E-mail), chat and instant messaging, Peer-to-Peer (P2P) and file-sharing application, file transfer protocols, IP-based voice and/or video telephony, on-line gaming applications, collaboration services, on-line communities and forums, and/or any other suitable application. Usually, each application uses a certain communication protocol for exchanging data.

A certain user communicates over the network by exchanging data items that adhere to the communication protocol or application being used. Exemplary data items may comprise web pages, e-mail messages, chat conversations and File Transfer Protocol (FTP) sessions. In the context of the present patent application and in the claims, the term "data item" is used to describe self-contained communication products, which may contain multiple components and may be constructed by multiple lower-level transactions. For example, a web page presented by a browser may contain different text fields, images and other components. A single web page may be constructed by the browser in a number of Hyper Text Transfer Protocol (HTTP) transactions. Regardless of the number of individual components or of the number of transactions used to construct a given web page, the page as a whole is regarded as a single data item. As another example, a chat conversation, which may comprise several messages, transferred files and other services, is viewed as a single data item. As yet another example, a single instant messaging message often involves a number of Transmission Control Protocol (TCP) transactions, but is nevertheless considered a single data item.

System 20 accepts data items from IP network 20 and processes the data items, in order to provide information regarding users of interest, transactions of interest and/or any other useful information based on the data items. System 20 comprises a network interface 32, which accepts data items from network 24. Depending on the type and configuration of the network, interface 32 may comprise a wireline interface coupled to the network, a wireless receiver coupled to a suitable antenna, or any other suitable means of receiving data items exchanged over the network. Further alternatively, network elements such as switches and routers can be configured to divert or send copies of data items to interface 32. Such methods are commonly referred to as port spanning or port mirroring and are well known in the art.

System 20 further comprises a prioritization processor 36, which prioritizes the data items using methods that are described in detail hereinbelow, and a user interface 40, using which system 20 interacts with an analyst 44. Typically, processor 36 comprises a general-purpose computer, which is programmed in software to carry out the functions described herein. The software may be downloaded to the computer in electronic form, over a network, for example, or it may alternatively be supplied to the computer on tangible media, such as CD-ROM.

### CONTEXT-AWARE PRIORITIZATION

In many practical cases, the number of data items that are processed by system 20 is extremely large. Typically, only a small percentage of the data items have real value in a certain context, but these items are often obscured by "noise," i.e., by a large number of lower-value or useless data items. In many scenarios, it is all but impossible for the analyst to manually differentiate between higher-value and lower-value data items, so as to efficiently grasp and make use of the multitude of data items provided by the system.

In view of the difficulties associated with manual sorting of large numbers of data items, embodiments of the present disclosure provide methods and systems for automated data item prioritization. The prioritization methods described herein are context-aware, i.e., they make use of the fact that the relevance of a certain data item usually differs from one analysis context to another.

As noted above, the term "context" is used to describe a particular data analysis task having certain objectives and/or preferences. A context can sometimes be defined as a combination of (1) the preferences of the analyst, i.e., how the analyst prioritizes his or her scope of work, (2) the nature of the traffic that is being prioritized, e.g., network usage patterns, traffic volume, content type and other factors, and (3) the nature of the analysis task conducted by the analyst, and its effect on the meaning of data items. For example, certain keywords that appear in data items and/or certain network traffic patterns may have different meanings in different analysis tasks or areas of interest.

The context may also consider the working habits or preferences of the analyst. For example, an analyst who does not understand any language other than English may wish to assign non-English data items low priorities. A multi-lingual analyst may not have such a preference. As can be appreciated, a certain data item may be invaluable in one context and completely useless in another.

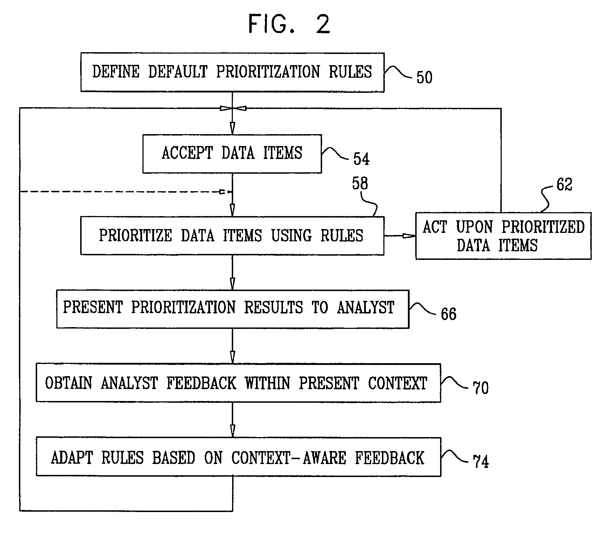

Fig. 2 is a flow chart that schematically illustrates a method for context-aware prioritization of data items, in accordance with an embodiment of the present disclosure. The method describes a data analysis session conducted by an analyst using system 20. During the session, processor 36 prioritizes data items by applying a set of one or more context-aware rules. The rules operate on the data items and produce relevance scores, which define the relative priorities among the data items. The prioritization rules are adapted iteratively based on feedback provided by the analyst, and therefore gradually converge to a set of rules that characterize the desired context. Note that the context is not defined explicitly by the analyst, and the rules are not formulated explicitly. The analyst provides feedback on the results of the automatic prioritization process, and the feedback is used for adapting the automatically-generated rules.

The rules may consider the content of the data items, such as the presence, absence or occurrence frequency of certain keywords or phrases, the language used in the data items (which may be detected automatically or known in advance), word counts, detected accent or speed (when the data item comprises audio), and/or any other suitable property of the content of the data item.

In addition to content, a data item often contains metadata fields or attributes. Additionally or alternatively to considering the data content, the rules may consider different metadata attributes, such as the protocol type, the amount of data being transferred, the time and date in which the data was generated, the number, size and/or type of files that are included in the data item, identifiers of the user (e.g., username, nickname or communication address), identifiers of the links or networks used for transferring the data item, and/or any other relevant metadata information of the data item.

The method of Fig. 2 begins with processor 36 using a set of default prioritization rules, at a default rule definition step 50. Initially, when the context is not yet defined, the default rules may use different heuristics, such as heuristics referring to the relative priorities among different content types. For example, E-mail and instant messaging data items may be assigned higher scores than web pages.

Processor 36 accepts data items for prioritization via network interface 32, at an input step 54. In some embodiments, the data items provided for prioritization are filtered by a certain filter or according to certain criteria. For example, the data items may be associated with a certain user or user terminal, the e-mail messages sent to a certain e-mail address, the transactions performed with a certain web site, the data items destined to or originating from a certain country or territory, and/or any other criterion.

Processor 36 prioritizes the data items in accordance with the prioritization rules, at a prioritization step 58. Each data item is thus assigned a score, which indicates its relevance or value in the present context. Note that the scores enable comparing of different types of data items. In other words, the ordered list of prioritized data items will usually have data items of different types.

System 20 may perform or invoke an action based on the prioritized data items, at an action step 62. The system may carry out different types of actions. Several exemplary actions are described further below. The method loops back to input step 54 above, for accepting subsequent data items from network 24.

After prioritizing the data items at prioritization step 58 above, processor 36 presents the prioritization results to analyst 44 using user interface 40, at a presentation step 66. The processor accepts feedback from the analyst regarding the prioritization, at a feedback step 70. The analyst may provide either positive or negative feedback, e.g., indicate that the score assigned to a certain data item is too high, too low, or correct.

Processor 36 adapts the set of prioritization rules based on the analyst's feedback, at an adaptation step 74. Any known machine learning or training method can be used for this purpose, such as, for example, methods based on neural networks or Hidden Markov Model (HMM) methods. Typically, the machine learning method is based on a parametric mathematical model, which produces the prioritization rules. In such a scheme, adapting the set of prioritization rules comprises tuning the parameters of the model, so that the resulting set of rules perform satisfactorily.

Tuning of the model parameters is often carried out by processing a "training set," i.e., a set of data items for which the desired results are known *a-priori*. The training set may be divided into two parts, the first part used for tuning the model parameters, and the second part used for testing the performance of the tuned rules. Tuning may be performed in an iterative manner, until satisfactory performance is achieved. In some implementations, the amount of tuning applied depends on a distance, or similarity, between the model results and the expected results. Iterative tuning may be performed by re-calculation or incrementally.

The analyst's feedback may comprise positive feedback (indications of correct prioritization) and/or negative feedback (indications of incorrect prioritization). By adapting the rules based on the analyst's feedback, the set of rules gradually converges to better characterize the desired context.

The method then loops back to input step 54 above, for accepting subsequent data items from the network. Processor 36 prioritizes the subsequent data items using the current set of rules. Alternatively, such as in the absence of new data items, the method may loop back to prioritization step 58 above, in order to re-prioritize the existing data items using the updated set of rules.

The analyst may provide feedback as to the current prioritization quality at any time. As the iterations continue, however, the amount of feedback and the amount of adaptation of the rules usually diminishes. In some cases, analyst feedback may become unnecessary after a sufficient (and preferably small) number of iterations.

As noted above, system 20 may carry out or invoke various actions based on the prioritization of the data items. For example, processor 36 may sort the data items based on the relevance scores, and present some or all of the sorted data items to the analyst in decreasing order of relevance. Processor 36 may filter out data items that are considered irrelevant, e.g., data items whose score is lower than a certain threshold. The system may trigger an alert, such as when a highly relevant data item is detected or when a newly-arriving data item matches a predetermined alerting rule. The alert may use any suitable technique, such as an audio alert, a visual alert, an e-mail message and/or a Short Messaging Service (SMS) notification. The system may also be used for deciding whether to record or discard data items, especially when storage resources are limited. For example, the system may decide to store only data items whose score is higher than a certain threshold.

Another possible type of action is profiling of other data items using the current set of rules. Assuming the set of rules has converged to the point in which it accurately characterizes the desired context, the set of rules can be used to determine the extent to which any other data item, or group of data items, matches the context. The profiled data items may be accepted from network 24 or from any other source, either in real-time or off-line. The profiling operation may produce a binary result, i.e., an indication of whether or not the profiled set of data items matches the context. Alternatively, the profiling operation may produce a soft quantitative measure, which indicates the level of correlation (match) between the profiled set and the context.

For example, when the context comprises a specific target person, the set of rules may uniquely identify network traffic patterns and content that is generated by this person. Applying the rule set to a collection of data items accepted from an external system may assist in collecting new network identifiers of the target person, track the person in spite of identity changes and otherwise assist in tracking the person.

The sequence of steps shown in Fig. 2 is an exemplary flow, which is chosen purely for the sake of conceptual clarity. In alternative embodiments, system 20 may carry out any other suitable sequence of steps for prioritizing data items. For example, the system may decide to act upon the prioritized data items only after a certain number of iterations, so that the set of rules is likely to adequately represent the desired context.

The description of Fig. 2 refers to a real-time process, in which newly-arriving data items are prioritized as they are accepted from network 24. Additionally or alternatively, the method can be applied to a certain collection of data items in a batch process. In such a process, system 20 repeatedly re-prioritizes the collection of data items while adapting the set of rules, without accepting new data items during the process. System 20 may also perform hybrid processes that combine off-line and real-time prioritization, such as periodic or occasional update cycles. Combining off-line and real-time prioritization may also be advantageous when the process of tuning the prioritization rules is computationally-intensive. In such cases, a cost-effective trade-off may be to apply coarse rule adaptation in real-time, and finer rule adaptation off-line.

As noted above, the system can also perform off-line context-aware prioritization of a collection of data items that were obtained from another network or from any other source.

The description above refers to a single analysis session, in which an analyst uses system 20 to prioritize data items in a particular context. In alternative embodiments, system 20 may support multiple sessions having different contexts, which may operate on the same or different data items. Some sessions may be time-limited, while others may have a continuous, on-going nature.

It will be appreciated that the embodiments described above are cited by way of example, and that the present disclosure is not limited to what has been particularly shown and described hereinabove. Rather, the scope of the present disclosure includes both combinations and sub-combinations of the various features described hereinabove, as well as variations and modifications thereof which would occur to persons skilled in the art upon reading the foregoing description and which are not disclosed in the prior art.

## Claims

1. A computer-implemented method for carrying out a data analysis task having an associated analysis context, the method comprising:
accepting a plurality of data items exchanged over a communication network;
the method **characterized by**:
determining one or more rules responsively to the analysis context for prioritizing the data items;
applying the rules to the data items to produce a first prioritization of the data items;
presenting the data items to a human user in accordance with the first prioritization;
obtaining feedback from the human user regarding the first prioritization;
adapting the set of rules responsively to the feedback; and
generating a second prioritization of the data items by applying the adapted set of rules to the data items.

2. The method according to claim 1, wherein applying the adapted set of rules to the data items comprises assigning the data items respective relevance scores, which represent the second prioritization.

3. The method according to claim 2, wherein the data items comprise a first data item produced by a first application and a second data item produced by a second application different from the first application, and wherein generating the second prioritization comprises prioritizing the first data item relative to the second data item using the relevance scores.

4. The method according to claim 1, and comprising performing an action with respect to the data items based on the second prioritization.

5. The method according to claim 4, wherein performing the action comprises performing at least one action type selected from a group of types consisting of:
presenting at least some of the data items, ordered in accordance with the second prioritization, to the human user;
filtering out some of the data items responsively to the second prioritization;
triggering an alert; and
determining a first subset of the data items to be stored and a second subset of the data items to be discarded responsively to the second prioritization.

6. The method according to claim 1, and comprising determining an extent to which another plurality of data items matches the analysis context by applying the adapted set of rules to the other plurality of data items.

7. A system for carrying out a data analysis task having an associated analysis context, the system comprising:
a network interface, which is arranged to accept a plurality of data items exchanged over a communication network; and
the system **characterized by**:
a processor, which is coupled to the network interface, and which is configured to determine one or more rules responsively to the analysis context for prioritizing the data items, to apply the rules to the data items to produce a first prioritization of the data items, to present the data items to a human user in accordance with the first prioritization, to obtain feedback from the human user regarding the first prioritization, to adapt the set of rules responsively to the feedback, and to generate a second prioritization of the data items by applying the adapted set of rules to the data items.

8. The system according to claim 7, wherein the processor is coupled to assign the data items respective relevance scores, which represent the second prioritization.

9. The system according to claim 8, wherein the data items comprise a first data item produced by a first application and a second data item produced by a second application different from the first application, and wherein the processor is coupled to prioritize the first data item relative to the second data item using the relevance scores.

10. The system according to claim 7, wherein the processor is coupled to perform an action with respect to the data items based on the second prioritization.

11. The system according to claim 10, wherein the action comprises at least one action type selected from a group of types consisting of:
presenting at least some of the data items, ordered in accordance with the second prioritization, to the human user;
filtering out some of the data items responsively to the second prioritization;
triggering an alert; and
determining a first subset of the data items to be stored and a second subset of the data items to be discarded responsively to the second prioritization.

12. The system according to claim 7, wherein the processor is coupled to determine an extent to which another plurality of data items matches the analysis context by applying the adapted set of rules to the other plurality of data items.

13. A computer software product for carrying out a data analysis task having an associated analysis context, the product comprising a computer-readable medium, in which program instructions are stored, which instructions, when read by a computer, cause the computer to accept a plurality of data items exchanged over a communication network, wherein the computer software product is
**characterized by**:
the instructions, when read by the computer, further cause the computer to determine one or more rules responsively to the analysis context for prioritizing the data items, to apply the rules to the data items to produce a first prioritization of the data items, to present the data items to a human user in accordance with the first prioritization, to obtain feedback from the human user regarding the first prioritization, to adapt the set of rules responsively to the feedback, and to generate a second prioritization of the data items by applying the adapted set of rules to the data items.
